## Europäisches Patentamt
## European Patent Office
## Office européen des brevets

(19)

(11) Numéro de publication: **0 176 411**
**B1**

(12)

# FASCICULE DE BREVET EUROPÉEN

(45) Date de publication du fascicule du brevet:
**10.08.88**

(51) Int. Cl.⁴: **B 23 K 35/362,** B 23 K 9/18

(21) Numéro de dépôt: **85401722.5**

(22) Date de dépôt: **05.09.85**

(54) Flux solide pour soudage a l'arc submerge.

(30) Priorité: **11.09.84 FR 8413909**

(43) Date de publication de la demande:
**02.04.86 Bulletin 86/14**

(45) Mention de la délivrance du brevet:
**10.08.88 Bulletin 88/32**

(84) Etats contractants désignés:
**BE DE FR GB IT LU**

(56) Documents cité:
**BE-A-863 836
DE-A-2 316 356
FR-A-2 383 748
FR-A-2 391 807
US-A-2 228 639
US-A-3 023 133**

(73) Titulaire: **LA SOUDURE AUTOGENE FRANCAISE,
75, Quai d'Orsay, F-75007 Paris (FR)**
(84) Etats contractants désignés: **BE DE FR GB LU**

(73) Titulaire: **L'AIR LIQUIDE, SOCIETE ANONYME
POUR L'ETUDE ET L'EXPLOITATION DES
PROCEDES GEORGES CLAUDE, 75, Quai d'Orsay,
F-75321 Paris Cédex 07 (FR)**
(84) Etats contractants désignés: **IT**

(72) Inventeur: **Cousin, Etienne, 90, rue Marius Aufan,
F-92300 Lavallois Perret (FR)**

(74) Mandataire: **Bouton Neuvy, Liliane, L'Air liquide,
Société Anonyme pour L'Etude et L'Exploitation
des Procédés Georges Claude 75, Quai d'Orsay,
F-75321 Paris Cédex 07 (FR)**

EP 0 176 411 B1

## Description

La présente invention concerne un flux utilisable pour le soudage d'acier sous flux solide.

Lors du soudage par le procédé arc submergé par exemple, le flux solide doit assurer différentes fonctions: stabilité de l'arc, morphologie du cordon, protection lors du transfert des gouttes et lors du refroidissement du cordon. Ces propriétés doivent être alliées à une bonne maniabilité opératoire, ce qui est illustré principalement par le détachement du laitier. Ces diverses propriétés sont communément regroupées sous le vocable de "caractéristiques d'emploi". Les flux donnant les meilleures caractéristiques d'emploi sont d'une manière générale du type manganèse silicate ou alumino-rutile. Ces flux sont souvent dits acides, et sont oxydants ce qui conduit à une teneur élevée en oxygène dans le métal déposé et à des caractéristiques de résilience faible à basse température. D'autre part, des flux dits basiques du type alumino-basique ou fluorurobasique sont souvent d'un emploi plus difficile et présentent un détachement de laitier nettement moins aisé.

Sur le plan métallurgique, le flux conditionne les transferts chimiques par l'intermédiaire des échanges entre les gouttes de métal liquide et l'atmosphère environnante créée par le flux sous l'effet de l'arc électrique.

Dans un assemblage multi-passes, on trouve toujours deux types de structure correspondant l'une aux zones recuites par l'exécution des passes suivantes et l'autre non recuite ayant par conséquent conservé une structure brute de solidification. Les caractéristiques de résilience de ces deux zones peuvent être très différentes. Il est clair que du point de vue d'une construction, il est particulièrement important d'obtenir des caractéristiques de ténacité voisines dans ces deux types de zone.

Les zones recuites présentent généralement une structure ferritique à grains fins, dans ces zones, la résilience dépend du diamètre des grains ferritiques donc des éléments d'alliage ainsi que du taux d'oxygène qui détermine la répartition inclusionnaire ce qui influe sur le niveau ductile.

Dans les zones brutes de solidification, la résilience dépend essentiellement de la structure qui, elle, est déterminée par le cycle thermique et l'analyse chimique, qui conditionne entre autre la trempabilité. Toutefois, la simple connaissance du cycle thermique de soudage et de la composition chimique élémentaire telle que l'on peut la déterminer par voie chimique ou spectographique ne permet pas aujourd'hui de prédire la structure et donc les valeurs de résilience. Il a, en effet, été montré que de bonnes caractéristiques dans ces zones sont liées à une structure de ferrite aciculaire qui apparaît par germination sur certaines inclusions dont la nature n'est pas actuellement bien définie. Ces inclusions sont probablement des oxydes qui proviennent de réactions d'oxydo-réductions complexes et résultent donc pour une grande part du flux et des résidus de désoxydation présents dans le fil électrode. Si l'on considère que les inclusions qui permettent la germination de la ferrite aciculaire sont des oxydes, le taux d'oxygène dans la soudure est donc un facteur important. Une augmentation de l'oxygène favorise le développement de la ferrite aciculaire, mais en augmentant,le réseau inclusionnaire diminue le niveau ductile de résilience. D'autre part, une diminution de l'oxygène améliore le niveau ductile mais risque de compromettre la formation de ferrite aciculaire.

La présente invention a pour but d'élaborer un flux ayant de bonnes caractéristiques d'emploi comme les flux manganèse-silicate ou alumino-rutile mais conduisant à un taux d'oxygène dans le métal déposé beaucoup plus faible comparable à celui obtenu avec des flux alumino-basique ou fluoro-basique. De bonnes caractéristiques de résilience à basse température déterminée sur moule AFNOR suivant les normes NFA 81 322 et 81 323 peuvent être obtenues en associant le flux objet de l'invention avec des fils électrodes de nuances très différentes et indépendamment des résidus de désoxydation. D'autres avantages de l'invention seront mis en évidence dans la suite de la description. On propose une composition de flux qui comporte essentiellement en poids : 1,5 à 9 % de MnO, 3 à 14 % de $TiO_2$ + $ZrO_2$, 3 à 15 % de $Al_2O_3$, 20 à 40 % de $SiO_2$ 15 à 35 % de CaO, 6 à 30 % de MgO, 13 à 28 % de $CaF_2$, $B_2O_3$ 0,5 %, le rapport pondéral % MgO/ CaO étant compris entre 0,4 et 0,9, et l'indice de basicité entre 1,2 et 1,8; cette avant-dernière caractéristique pouvant être comprise entre 0,5 et 0,8 pour le rapport MgO/CaO. Le flux contient de l'oxyde de sodium $Na_2O$ et de l'oxyde de potassium $K_2O$, à une teneur pondérale $Na_2O$ + $K_2O$ inférieure à 1 %.

Suivant le type d'applications du procédé de soudage en courant continu ou alternatif à grande vitesse ou à vitesse relativement lente, en soudage monoélectrode ou multiélectrodes , en "bipasse" ou multipasse, on choisit une variante de l'invention particulièrement adaptée au résultat recherché. Selon une variante, la teneur en MnO est comprise entre 2 et 6 % en poids et la teneur en $SiO_2$ est comprise entre 25 et 35 % en poids. Selon une autre variante, la teneur en oxyde de bore est comprise entre 0,15 et 0,40 % en poids et la teneur en $TiO_2$ est comprise entre 3 et 9 %.

Le flux peut être à l'état aggloméré ou préfondu; chaque forme présentant certains avantages. Toutefois, dans certaines conditions, l'emploi d'un flux aggloméré peut présenter un risque d'hétérogénéité de la répartition de l'oxyde de bore, risque qui est supprimé par l'utilisation d'un flux préfondu, ce qui est retenu de préférence dans les applications.

L'invention trouve son application dans de nombreux domaines techniques tels que soudage bipasse du genre des tubes type pipelines ou soudage multipasse suivi ou non d'un traitement thermique et pour des nuances d'aciers doux et les aciers à haute limite élastique. Pour le soudage type pipeline, on obtient d'excellents résultats à plusieurs électodes, deux, trois ou quatre, à grande vitesse, jusqu'à 4 mètres par minute avec une dilution élevée de 50 à 75 %.

L'indice de basicité du flux B est déterminé selon la formule de Bonizewski

$$B = \frac{\% CaO + \% MgO + \% Na_2O + \% K_2O + \% LiO_2 + 1/2 \% MnO + \% CaF_2}{\% SiO_2 + 1/2 (\% TiO_2 + \% Al_2O_3 + \% ZrO_2)}$$

**0 176 411**

Les pourcentages étant exprimés en poids, pratiquement on utilisera de préférence un flux correspondant à l'invention dont l'indice de basicité sera compris entre 1,2 et 1,8, et avantageusement entre 1,5 et 1,8.

Il est donné, ci-après, des exemples qui illustrent l'invention à titre non limitatif.

**Exemple 1.**

Les tableaux 1 et 2 permettent de faire une comparaison entre différents flux disponibles sur le marché (flux dits "acides" ou "basiques" ) et des flux expérimentaux correspondant ou non à l'invention. Les flux $C_1$ à $C_4$ sont disponibles sur le marché, les flux $E_1$ à $E_8$ sont expérimentaux et $E_1$ à $E_5$ correspondent à l'invention alors que $E_6$ à $E_8$ n'y correspondent pas , en raison de leur qualités d'emploi qui sont inacceptables. Avec le flux $E_6$ dont la teneur en fluorine $CaF_2$ est de 10 % et le rapport MgO/CaO de 1,05, l'aspect du cordon de soudage est mauvais, tandis qu'avec le flux $E_7$, dont la teneur en silice $SiO_2$ est de 16 %, et la teneur en $TiO_2 + ZrO_2$ de 15 %, le détachement du laitier est mauvais. On constate beaucoup d'adhérence sur le cordon de soudage et un mauvais détachement de laitier avec le flux $E_8$ dont la teneur en alumine est de 20 %.

Le tableau 1 présente la composition chimique des flux objet de la comparaison d'emploi et de la teneur en oxygène du métal déposé qui sont présentés dans le tableau 2.

Les paramètres de soudage sont : 550 A - 28 V - $V_S$ = 45 cm/mn. Le métal d'apport est un fil type $S_4$, c'est-à-dire un fil plein de composition pondérale %; dans l'exemple, C = 0,122, Mn = 1,95, Si = 0,045, S = 0,009, P = 0,014, B = 13 p.p.m.

Tableau 1 - Les valeurs sont données en pourcentage en poids.

| | $C_1$ acide | $C_2$ acide | $C_3$ basique | $C_4$ basique | $E_1$ | $E_2$ | $E_3$ | $E_4$ | $E_5$ | $E_6$ | $E_7$ | $E_8$ |
|---|---|---|---|---|---|---|---|---|---|---|---|---|
| MnO | 42 | 14 | <5 | 3,5 | 2,5 | 4 | 3 | 5 | 4 | 5 | 5 | 4 |
| $TiO_2+ZrO_2$ | - | 11 | 4 | - | 5 | 5 | 4 | 5 | 5 | 5 | 15 | 4 |
| $Al_2O_3$ | 4 | 40 | 22,5 | <2 | 6 | 10 | 18 | 6 | 7 | 6 | 6 | 20 |
| $SiO_2$ | 39 | 21 | 15,5 | 41 | 29 | 27 | 21 | 28 | 29 | 27 | 16 | 22 |
| CaO | 7 | - | - | 44 | 21 | 20 | 23 | 21 | 20 | 22 | 23 | 20 |
| MgO | - | 4 | 28,5 | <1 | 15 | 14 | 15 | 12 | 13,5 | 23 | 11 | 14 |
| $CaF_2$ | 5 | 7 | 23 | - | 20 | 19 | 14 | 21 | 20 | 10 | 23 | 15 |
| $Na_3AlF_6$ | - | - | - | 7,5 | - | - | - | - | - | - | - | - |
| $NaO_2+K_2O$ | <2 | <4 | <4 | <2 | <1 | <1 | <1 | <1 | <1 | <1 | <1 | <1 |
| FeO | <3 | <3 | <2 | <2 | <2 | <2 | <2 | <2 | <2 | <2 | <2 | <2 |
| $B_2O_3$ | - | - | - | - | - | - | - | - | 0,3 | - | - | - |
| B indice de basicité | 0,8 | 0,48 | 1,8 | 1,28 | 1,80 | 1,59 | 1,67 | 1,68 | 1,58 | 1,77 | 2,24 | 1,5 |

Tableau 2: Pour chaque flux, il est indiqué la teneur en oxygène du métal déposé et des observations sur les caractéristiques d'emploi: + : bon ; = : moyen ; 0 : mauvais ;

| | $C_1$ | $C_2$ | $C_3$ | $C_4$ | $E_1$ | $E_2$ | $E_3$ | $E_4$ | $E_5$ | $E_6$ | $E_7$ | $E_8$ |
|---|---|---|---|---|---|---|---|---|---|---|---|---|
| $O_2$ dans le métal déposé en ppm | 875 | 11150 | 450 | 450 | 403 | 533 | 533 | 560 | 514 | 338 | 310 | 569 |
| mouillage | + | + | = | = | + | + | = | + | + | = | + | = |
| aspect de cordon | + | + | = | = | + | + | + | + | + | 0 | = | = |
| adhérence sur cordon pleine tôle | + | + | + | 0 | + | + | = | + | + | = | = | 0 |
| détachement de laitier en fond de chanfrein | = | + | = | 0 | = | = | = | = | + | = | 0 | 0 |

Il apparaît clairement que seuls les flux correspondants à l'invention permettent d'obtenir simultanément de bonnes propriétés d'emploi et une basse teneur en oxygène.

3

**0 176 411**

**Exemple 2:**

Etude de différents flux pour le soudage multipasse. On réalise des moules AFNOR suivant la norme NFA 81.322 en 2 passes par couche sauf pour la dernière couche qui est réalisée en 3 passes avec la dernière passe au centre du moule. Cette disposition des cordons de soudure permet de prélever des éprouvettes de résilience: CHARPY V 10 x 10 x 55 mm soit en zones recuites, soit en zones brutes de solidification.

Pour les zones recuites, les éprouvettes sont prélevées au coeur du moule axe soudure, pour la zone brute de solidification, elles sont prélevées en haut du moule, "sous peau" axe soudure, c'est-à-dire dans la dernière passe de soudage.

Les paramètes utilisés sont: fil de diamètre 4 mm, partie terminale de 28 mm, vitesse d'avance 45 cm/mn, tension 28 V et intensité 550A. On utilise les flux $E_1$, $E_5$, $E_6$.

Composition chimique du fil et du métal déposé avec chaque flux.

|  | Fil $S_4$ | métal déposé $S_4/E_1$ | $S_4/E_5$ | $S_4/E_6$ |
|---|---|---|---|---|
| C % | 0,122 | 0,086 | 0,077 | 0,109 |
| Si % | 0,045 | 0,24 | 0,20 | 0,19 |
| Mn % | 1,95 | 1,46 | 1,54 | 1,83 |
| S % | 0,009 | 0,017 | 0,015 | 0,017 |
| P % | 0,014 | 0,020 | 0,020 | 0,021 |
| B ppm | 13 | 6 | 17 | 9 |
| $O_2$ ppm |  | 403 | 514 | 338 |

On prélève des éprouvettes Charpy avec l'entaille située en zone recuite et en zone brute de solidification et on détermine la résilience Charpy KCV en décajoules par $cm^2$ à -20°C et -40°C

| KCV en da $J/cm^2$ | $S_4/E_1$ zone recuite | $S_4/E_1$ zone brute | $S_4/E_5$ zone recuite | $S_4/E_5$ zone brute | $S_4/E_6$ zone recuite | $S_4/E_6$ zone brute |
|---|---|---|---|---|---|---|
| -20°C | 17 | 8 | 15 | 13 | 10 | 3 |
| -40°C | 9 | 3 | 9 | 7 | 3 | 1 |

Un examen micrographique montre pour le moule $S_4/E_6$ une structure composée de constituants lamellaires, de bainite granulaire et de ferrite proéutectoïde, une structure de même type pour le moule $S_4/E_1$ mais avec un peu de ferrite aciculaire et pour le moule $S_4/E_5$ une structure de ferrite aciculaire et de ferrite proéutectoïde.

Les résultats de résilience montrent claireriment l'intérêt d'une structure de ferrite aciculaire qui permet d'assurer des caractéristiques de ténacité voisines dans l'ensemble d'une construction.

**Exemple 3:**

Avec le flux $E_5$, des moules ont été réalisés avec différentes nuances de fils d'apport. Les paramètres de soudage sont 550 A - 28 V - 45 cm/mn température entre passe 150°C, et les fils ont tous un diamètre de 4 mm.

Composition des fils:

|  | F 1 | F 2 | F 3 | F 4 | F 5 |
|---|---|---|---|---|---|
| % C | 0,122 | 0,112 | 0,119 | 0,094 | 0,095 |
| % Si | 0,045 | 0,41 | 0,060 | 0,15 | 0,035 |
| % Mn | 1,95 | 1,10 | 1,89 | 0,90 | 1,70 |
| %S | 0,009 | 0,017 | 0,011 | 0,017 | 0,020 |
| % P | 0,014 | 0,010 | 0,018 | 0,010 | 0,017 |
| % Mo | 0,014 | 0,55 | 0,49 | 0,53 | 0,51 |
| % Ni | 0,028 | 0,067 | 0,020 | 0,081 | 0,52 |
| % Cr | 0,028 | 0,071 | 0,030 | 1,61 | 0,031 |
| % Ti | 0,031 | 0,17 | 0,013 | 0,006 | 0,011 |

Composition du métal déposé avec les fils F1 à F5 et le flux E5.

4

**0 176 411**

| | F 1 | F 2 | F 3 | F 4 | F 5 |
|---|---|---|---|---|---|
| % C | 0,077 | 0,056 | 0,062 | 0,064 | 0,045 |
| % Si | 0,20 | 0,57 | 0,31 | 0,24 | 0,22 |
| % Mn | 1,54 | 1,04 | 1,51 | 0,87 | 1,13 |
| % S | 0,015 | 0,011 | 0,017 | 0,018 | 0,015 |
| % P | 0,020 | 0,024 | 0,024 | 0,014 | 0,020 |
| % Mo | 0,013 | 0,49 | 0,39 | 0,41 | 0,41 |
| % Ni | 0,034 | 0,073 | 0,026 | 0,084 | 0,42 |
| % Cr | 0,029 | 0,061 | 0,031 | 1,17 | 0,035 |
| % Ti | 0,010 | 0,030 | 0,011 | 0,008 | 0,010 |
| B ppm | 17 | 18 | 18 | 15 | 18 |
| $O_2$ppm | 514 | 503 | 557 | 518 | 537 |

Sur chaque moule, des éprouvettes de résilience Charpy V 10 x 10 x 55 mm ont été prélevées "à coeur" ainsi qu'une traction cylindrique.

Sur le moule F 1/E 5, un traitement thermique de 2 heures à 620°C avec une montée et descente en température de 50°C/heure a été effectué et sur le moule F 4/E 5 le même traitement mais avec une température de maintien de 640°C. Sur les moules ayant subi un traitement thermique, les mêmes essais mécaniques sont réalisés. On détermine la résilience en décajoules par cm² à -20°C et -40°C et sur la traction la limite élastique et la charge à la rupture en MegaPascal, l'allongement et la striction en pourcentage.

| | F 1 | | F 2 | F 3 | F 4 | | F 5 |
|---|---|---|---|---|---|---|---|
| KCV en da J/cm² | brut de soudage | après traite- ment | | | brut de soudage | après traite- ment | |
| - 20°C | 15 | 16 | 9 | 11 | 8,5 | 7 | 13,5 |
| -40°C | 9 | 10 | 7,5 | 6,8 | 5 | 5,5 | 7,5 |
| E (M pa) | 433 | 393 | 618 | 583 | | 614 | 589 |
| R (M pa) | 532 | 499 | 685 | 673 | | 678 | 665 |
| A % | 30,6 | 32,8 | 24,2 | 23,8 | | 21,4 | 23 |
| E % | 69,7 | 72,9 | 67,5 | 66,9 | | 65,1 | 60,3 |

Les résultats ci-dessus montrent que le flux E 5 permet d'obtenir un bon niveau de résilience à basse température avec des fils d'apport de nuances très différentes.

**Exemple 4:**

Le flux E 5 correspondant à la présente invention peut être utilisé aussi à grande vitesse avec le procédé multi-électrodes.

Des tôles pour les pipelines en acier X 60 et X 70 ont été assemblées.

Compositions chimiques des tôles et des fils utilisés.

| | X 60 | X 70 | F 6 | F 7 | F 8 |
|---|---|---|---|---|---|
| % C | 0,110 | 0,083 | 0,112 | 0,095 | 0,090 |
| % Si | 0,26 | 0,37 | 0,41 | 0,035 | 0,066 |
| % Mn | 0,91 | 1,44 | 1,10 | 1,70 | 0,93 |
| % S | 0,014 | 0,015 | 0,017 | 0,020 | 0,011 |
| % P | 0,021 | 0,019 | 0,010 | 0,017 | 0,014 |
| % Ni | 0,31 | 0,020 | 0,067 | 0,52 | 0,027 |
| % Mo | 0,007 | 0,006 | 0,55 | 0,51 | 0,47 |
| % Cu | 0,29 | 0,015 | 0,055 | 0,14 | 0,055 |
| % Al | 0,036 | 0,029 | 0,016 | 0,010 | 0,003 |
| % Nb | 0,028 | 0,035 | 0,013 | <0,001 | <0,001 |
| % Ti | 0,003 | 0,003 | 0,17 | 0,011 | 0,022 |
| % V | 0,060 | 0,053 | 0,006 | 0,010 | 0,010 |

On réalise le soudage monopasse de chaque côté des tôles pour pipelines de nuance X 60 épaisseur 22,2 mm et X 70 épaisseur 15,4 mm par le procédé à l'arc submergé à 3 électrodes en courant alternatif.

Les paramètres de soudage sont les suivants :

X 60 épaisseur 22,2 mm    X 70 épaisseur 15,4 mm

|  | 1ère passe | 2ème passe | 1ère passe | 2ème passe |
|---|---|---|---|---|
| $I_1$ | 960 A | 970 A | 940 A | 800 A |
| $V_1$ | 32 V | 31 V | 30 V | 34 V |
| $I_2$ | 960 A | 970 A | 1050 A | 980 A |
| $V_2$ | 41 V | 39 V | 40 V | 39 V |
| $I_3$ | 650 A | 575 A | 800 A | 625 A |
| $V_3$ | 43 V | 39 V | 42 V | 42 V |
| $V_S$ | 1,2 m/mn | 1,2 m/mn | 1,6 m/mn | 1,6 m/mn |

Les intensités et voltages appliqués à chaque électrode sont désignés par $I_1$, $I_2$, $I_3$ et $V_1$, $V_2$, $V_3$ exprimés en amphères et volts. La vitesse soudage représentée par $V_S$ est exprimée en mètre par minute.

En fonction de l'analyse chimique du métal de base, différents couplages de fils ont été utilisés:

. pour l'acier X 60 : ler fil F 6        2ème et 3ème fils F 7

. pour l'acier X 70 : ler fil F 6        2ème et 3ème fils F 8

On prélève des éprouvettes Charpy V 10 x 10 x 55 mm à 1,6 mm sous peau côté 2ème passe. On procède à l'analyse chimique du métal déposé et on détermine la résilience Charpy KCV exprimée en décajoules par $cm^2$ à + 20°C, - 20°C; - 40°C et - 60°C.

Analyse chimique du métal déposé :

|  |  | F 6- F 7- F 7/E 5 acier X 60 | F 6- F 8- F 8/E 5 acier X 70 |
|---|---|---|---|
| % C | 0,102 | 0,084 |  |
| % Si | 0,34 | 0,44 |  |
| % Mn | 1,08 | 1,26 |  |
| % S | 0,017 | 0,010 |  |
| % P | 0,018 | 0,019 |  |
| % Ni | 0,18 | 0,037 |  |
| % Mo | 0,18 | 0,18 |  |
| % Cu | 0,10 | 0,052 |  |
| % Al | 0,026 | 0,021 |  |
| % Nb | 0,019 | 0,021 |  |
| % Ti | 0,023 | 0,022 |  |
| % V | 0,016 | 0,038 |  |
| Bppm | 11 | 16 |  |
| $O_2$ppm | 366 | 355 |  |

Résultats de résilience:

| KCV en da J/$cm^2$ | X 60 | X70 |
|---|---|---|
| + 20°C | 19,8 | 18 |
| - 20°C | 17,1 | 17 |
| - 40°C | 14,5 | 14,5 |
| - 60°C | 8,5 | 8,5 |

Les résultats ci-dessus montrent que l'utilisation d'un flux correspondant à l'invention associé à des fils choisis en fonction de l'analyse de la tôle permet d'obtenir une soudure présentant une très bonne ténacité et un taux d'oxygène assez bas.

## Revendications

1. Flux pour soudage à l'arc submergé, caractérisé en ce qu'il contient essentiellement en poids 1,5 à 9 % en MnO, 3 à 14 % de $TiO_2$ + $ZrO_2$, 3 à 15 % de $Al_2O_3$, 20 à 40 % de $SiO_2$, 15 à 35 % de CaO, 6 à 30 % de MgO, 13 à 28 % de $CaF_2$, la teneur en oxyde de bore $B_2O_3$ étant inférieure à 0,5 %, les teneurs en CaO et MgO satisfaisant la condition du rapport % MgO/% CaO compris entre 0,4 et 0,9, l'indice de basicité, selon Bonizewski compris entre 1,2 et 1,8, et le pourcentage pondéral $Na_2O$ + $K_2O$ étant inférieur à 1.

2. Flux selon la revendication 1, caractérisé en ce que le rapport pondéral % MgO/% CaO est compris entre 0,5 et 0,8 et l'indice de basicité compris entre 1,5 et 1,8.

3. Flux selon la revendication 1, caractérisé en ce que la teneur en manganèse exprimée en oxyde de manganèse MnO est comprise entre 2 et 6 % en poids total du flux.

4. Flux selon la revendication 1, caractérisé en ce que la teneur en silicium exprimée en oxyde de silicium $SiO_2$ est comprise entre 25 et 35 % en poids total du flux.

5. Flux selon la revendication 1, caractérisé en ce que la teneur en titane exprimée en oxyde de titane $Ti O_2$ est comprise entre 3 et 9 % en poids total du flux.

6. Flux selon une quelconque des revendications 1 à 5, caractérisé en ce que la teneur en bore exprimée en oxyde de bore $B_2O_3$ est comprise entre 0,15 et 0,40 % en poids total du flux.

7. Flux selon une quelconque des revendications 1 à 6, caractérisé en ce que le flux est à l'état fondu.

8. Application du flux selon une quelconque des revendications 1 à 6, caractérisée en ce que l'on procède au soudage à l'arc submergé en courant continu ou alternatif à une ou plusieurs électrodes, en bi-passe ou multipasse.

9. Application selon la revendication 8, caractérisée en ce que l'on procède au soudage de tubes, type pipelines, à grande vitesse, à plusieurs électrodes.


**Patentansprüche**

1. Flußmittel für das Unterpulverlichtbogenschweißen, <u>dadurch gekennzeichnet</u>, daß es im wesentlichen 1,5 bis 9 Gew.-% Mno, 3 bis 14 Gew.-% $TiO_2$ + $ZrO_2$, 3 bis 15 Gew.-% $Al_2O_3$, 20 bis 40 Gew.-% $SiO_2$, 15 bis 35 Gew.-% CaO, 6 bis 30 Gew.-% MgO und 13 bis 28 Gew.-% $CaF_2$ enthält, wobei der Gehalt an Boroxid $B_2O_3$ unter 0,5 Gew.-% liegt, die Gehalte an CaO und MgO der Bedingung des Verhältnisses % MgO/% CaO zwischen 0,4 und 0,9 genügen, der Basizitätsindex nach Bonizewski zwischen 1,2 und 1,8 liegt und der Gewichtsprozentsatz an $Na_2O$ + $K_2O$ unter 1 liegt.

2. Flußmittel nach Anspruch 1, <u>dadurch gekennzeichnet</u>, daß das Gewichtsverhältnis % MgO/% CaO zwischen 0,5 und 0,8 liegt und der Basizitätsindex zwischen 1,5 und 1,8 liegt.

3. Flußmittel nach Anspruch 1, <u>dadurch gekennzeichnet</u>, daß der Gehalt an Mangan, ausgedrückt als Manganoxid Mno, zwischen 2 und 6 % des Gesamtgewichtes des Flußmittels liegt.

4. Flußmittel nach Anspruch 1, <u>dadurch gekennzeichnet</u>, daß der Gehalt an Silicium, ausgedrückt als Siliciumoxid $SiO_2$, zwischen 25 und 35 % des Gesamtgewichtes des Flußmittels liegt.

5. Flußmittel nach Anspruch 1, <u>dadurch gekennzeichnet</u>, daß der Gehalt an Titan, ausgedrückt als Titanoxid $TiO_2$- zwischen 3 und 9 % des Gesamtgewichts des Flußmittels liegt.

6. Flußmittel nach einem der Ansprüche 1 bis 5, <u>dadurch gekennzeichnet</u>, daß der Borgehalt, ausgedrückt als Boroxid $B_2O_3$, zwischen 0,15 und 0,40 % des Gesamtgewichtes des Flußmittels liegt.

7. Flußmittel nach einem der Ansprüche 1 bis 6, <u>dadurch gekennzeichnet</u>, daß das Flußmittel sich in geschmolzenem Zustand befindet.

8. Anwendung des Flußmittel nach einem der Ansprüche 1 bis 6, <u>dadurch gekennzeichnet</u>, daß man mit Unterpulverlichtbogen mit Gleichstrom oder Wechselstrom mit einer Elektrode oder mehreren Elektroden mit zwei oder mehreren Durchgängen schweißt.

9. Anwendung nach Anspruch 8, <u>dadurch gekennzeichnet</u>, daß man Röhren vom Pipelinetyp mit großer Geschwindigkeit mit mehreren Elektroden schweißt.


**Claims**

1. Flux for submerged arc welding, characterised in that it contains essentially, by weight, 1.5 to 9 % of MnO, 3 to 14 % of $TiO_2$ + $ZrO_2$, 3 to 15 % of $Al_2O_3$, 20 to 40 % of $SiO_2$, 15 to 35 % of CaO, 6 to 30 % of MgO, 13 to 28 % of $CaF_2$, the content of boron oxide $B_2O_3$ being less than 0.5 %, the contents of CaO and MgO satisfying the condition of the ratio % MgO/% CaO being between 0.4 and 0.9, the basicity index according to Bonizewski being between 1.2 and 1.8 and the $Na_2O$ + $K_2O$ percentage by weight being less than 1.

2. Flux according to claim 1, characterised in that the weight ratio % MgO/% CaO is between 0.5 and 0.8 and the basicity index is between 1.5 and 1.8.

3. Flux according to claim 2, characterised in that the manganese content, expressed as manganese oxide MnO is between 2 and 6 % of total flux weight.

4. Flux according to claim 1, characterised in that the silicon content, expressed as silicon oxide $SiO_2$, is between 25 and 35 % of total flux weight.

5. Flux according to claim 1, characterised in that the titanium content expressed as titanium oxide $TiO_2$, is between 3 and 9 % of total flux weight.

6. Flux according to any one of the claims 1 to 5, characterised in that the boron content, expressed as boron oxide $B_2O_3$, is between 0.15 and 0.40 % of total flux weight.

7. Flux according to any of the claims 1 to 6, characterised in that the flux is in the molten state.

8. Application of the flux according to any of the claims 1 to 6, characterised in that the submerged arc welding is conducted with direct or alternating current and using one or several electrodes, in two or several passes.

9. Application according to claim 8, characterised in that it is applied to the welding of tubes, of pipeline type, at high speed, with several electrodes.

8